Europäisches Patentamt

European Patent Office

Office européen des brevets

(19)

(11) Publication number: **0 067 494**
**B1**

(12) **EUROPEAN PATENT SPECIFICATION**

(45) Date of publication of patent specification: **04.06.86**

(51) Int. Cl.⁴: **B 23 K 35/368,** B 23 K 35/30

(21) Application number: **82300511.1**

(22) Date of filing: **01.02.82**

(54) **Welding electrode.**

(30) Priority: **03.06.81 US 270160**

(43) Date of publication of application:
**22.12.82 Bulletin 82/51**

(45) Publication of the grant of the patent:
**04.06.86 Bulletin 86/23**

(84) Designated Contracting States:
**DE FR GB IT NL SE**

(56) References cited:
**DE-A-2 320 939**
**FR-A-2 220 341**
**FR-A-2 351 753**
**GB-A-1 079 710**
**GB-A-2 068 813**
**US-A-3 051 822**
**US-A-3 868 487**
**US-A-3 924 091**
**US-A-4 029 934**
**US-A-4 125 758**

(73) Proprietor: **SUNBEAM NEDERLAND B.V.**
**Flevoland 21**
**NL-1382 JX Weesp (NL)**

(72) Inventor: **Ferree, Stanley Eugene**
**R.D. No.6 Box 212**
**Hanover Pennsylvania 17331 (US)**

(74) Representative: **Sheader, Brian N. et al**
**ERIC POTTER & CLARKSON 27 South Street**
**Reading Berkshire, RG1 4QU (GB)**

EP 0 067 494 B1

Courier Press, Leamington Spa, England.

**0 067 494**

## Description

The present invention is directed to welding electrodes, and more particularly, to flux-cord welding electrodes wherein the core includes a specific rutile based slag system with a small amount of boron added thereto, wherein the slag system includes little or no magnesium oxide.

Various welding electrode compositions are disclosed in the prior art. For example, United States Patent No. 3,868,487 discloses a flux-cored wire for submerged arc welding which contains a large proportion of calcium fluoride. Also United States Patent No. 3,924,091 pertains to a cored welding wire of neutral composition, i.e., having a basicity in the range of about 0.90 to 1.30. United States Patent No. 4,029,934 relates to a solid steel welding wire which may contain .002 to .008% boron in steel. And United States Patent No. 4, 125,758 teaches the use of a consumable strip electrode which may contain boron.

A commercially acceptable flux-cored continuous welding electrode is disclosed in United States Patent No. 3,051,822. Such electrode is employed in a welding process which utilizes a dual principal for shielding the welding operation. In particular, a slag is formed during welding to shield the molten weld metal, and a gas is used simultaneously to shield the arc column. An improved welding electrode, particularly adapted for use in vertical or other out-of-position welding is disclosed in United States Patent No. 3,800,120. The slag system employed in these contemporary, gas shielded, flux-cored electrodes are based, primarily, on titanium dioxide.

It appears that welds deposited with an electrode having a titanium dioxide based slag system may pick up titanium that has been reduced from the slag at high arc temperatures experienced during welding. It has been found that such titanium may be detrimental to the notch toughness of the weld especially in the stress relieved condition.

An alternative welding electrode is described in United Kingdom Patent Application No. 8104020 filed February 10, 1981, (Publication No. A2068813) having a slag system which though based at least in part on titanium dioxide, is able to produce a weld which exhibits improved notch toughness and impact properties. The core of such electrode includes a slag forming system comprising from about 5 to about 9 percent titanium dioxide, from about 0.2 to 1.0 percent magnesium oxide, less than about 2 percent calcium fluoride, and from about .003 to .08 percent boron, based on the total electrode weight.

An objective of the present invention is to provide a flux-cored electrode similar to that described in United Kingdom Patent Application No. 8104020, but which utilizes a titanium oxide based slag system which has little or no magnesium oxide. The weld from such electrode exhibits improved notch toughness and impact properties over conventional rutile based electrodes while maintaining good operating characteristics for welding in all positions.

An advantage of reducing or eliminating the amount of MgO in the core of an electrode, is that the feeding and agglomeration problems which may occur during manufacture of an electrode that contains fine MgO powder in the core, may be reduced.

Another advantage of reducing the amount of MgO in the core of the electrode, is the reduction of a compound which may absorb moisture that could be reduced in the arc and increase the possibility of hydrogen cracking. Thus, the present invention beneficially reduces the amount of hydrogen which may be present in the weld deposit.

A further advantage of the present invention is that improved notch toughness and impact properties can be attained with rutile based electrodes which contain little or no magnesium oxide.

Additionally, the reduction of MgO level in the core of an electrode reduces the overall cost of the electrode and may reduce the fume level produced during welding.

The present invention provides a welding electrode having a generally tubular ferrous metal sheath, and a core defined within the sheath for use in gas shield welding wherein the shielding gas consists of carbon dioxide, inert gas or oxygen and inert gas mixtures, or mixtures thereof, wherein said core consists of:—

(A) the following components in the percentage amounts stated based on the total weight of the electrode:

from 3.0 to 12.0% titanium dioxide
from 0 to less than 0.2% magnesium oxide up to 2.0% calcium fluoride,
from 0.1 to 1.0% sodium oxide
from 0.2 to 2.0% silicon,
from 0.5 to 4.5% manganese
from 0.003 to 0.08% boron, and optionally
(B) an alloying powder consisting of nickel, chrome, molybdenum or iron, or mixtures thereof.

An advantageous composition for the core is from 6.0 to 8.0% titanium dioxide, from 0.04 to 0.09% calcium fluoride, from 0.2 to 0.4% sodium oxide, from 0.5 to 1.5% silicon, from 1.5 to 3.0% manganese and from 0.01 to 0.03% boron, by total weight of the electrode.

The electrode of the present invention includes a generally tubular ferrous metal sheath. The sheath is formed of the metal to be consumed and transferred to the weld. In a preferred embodiment the electrode sheath may be formed from cold rolled strip material. Such strip material may be formed into an intermediate semicircular shape. While the strip is in such semicircular configuration, the core material, preferably homogeneously mixed together, may be poured therein. Then the strip or sheath, is closed

2

**0 067 494**

about the core materials. Where desired, the electrode may be drawn or rolled to sizes smaller than the originally formed electrode. It will be understood that such forming and drawing operations have the effect of compressing the core materials, eliminating any void spaces throughout the length of the electrode, and preventing shifting or segregation of the core materials during shipment or use.

The core of the electrode of the present invention comprises a mixture of slag forming ingredients, deoxidizers, arc stabilizers, and alloying ingredients. Additionally, iron powder may also be added to the core of the flux-cored electrode of the present invention to increase the deposition rate.

The slag forming system of the electrodes of the present invention is based on the oxide of titanium, $TiO_2$. More particularly the slag forming ingredients in the core of the electrode include from 3.0 to 12.0 percent titanium dioxide. The percentages stated herein are based on the total electrode weight unless specified to the contrary. Preferably titanium dioxide in the core comprises from 6.0 to 8.0 percent, e.g., 6.25 to 7.75 percent, of the total weight of the electrode. The titanium dioxide does not have to be in the pure form, but can be in other forms such as alkali metal titanates, leucoxene, and the like.

The slag forming system of the present invention contains little or no magnesium oxide. In particular, the core of the electrode contains less than 0.2 percent magnesium oxide, MgO. The prior art, particularly United Kingdom Patent Application No. 8104020 taught that MgO must be present in the core of such electrode in amounts of from about 0.2 to about 1.0 percent. It has been found that less than 0.2 percent MgO can be utilized in the core of the electrode, and yet the impact properties of the weld deposited by the electrode are improved over conventional titanium dioxide based slag system.

The slag forming system of the present invention further contains less than 2.0 percent calcium fluoride, $CaF_2$. The calcium fluoride contributes to the cleanliness of a weld deposit, and increases the viscosity of the slag which covers and protects the weld metal from the atmosphere. The calcium fluoride together with the titanium dioxide provides a slag viscosity necessary to support the molten metal during welding especially during welding in positions other than horizontal.

The oxide of the sodium $Na_2O$, in the range of from 0.10 to 1.0 percent, is also added to the core of the electrode. Sodium oxide serves as an arc stabilizer during welding and increases the basicity of the slag.

Basicity is an index of the oxygen potential of the flux system. It is commonly represented as a ratio of the basic oxides (including alkali oxides and other more thermodynamically stable oxides) to the acid oxides. Basicity is commonly represented by an equation such as:

$$\text{Basicity Index} = \frac{CaO + CaF_2 + MgO + K_2O + Na_2O + 1/2\ (MnO + FeO)}{SiO_2 + 1/2\ (Al_2O_3 + TiO_2 + ZrO_2)}$$

It is known that welding electrode flux compositions with a higher basicity have less inclusions and a potential for better toughness. Conversely, flux compositions with a lower basicity tend to have better wetting characteristics. Wetting characteristics is generally defined as the ability to form a good bond with the base material and form a deposit with a smooth surface profile. Also, lower basicity flux compositions are more likely to have all-position welding capability. As discussed above, an advantage of this invention is the provision of an improved slag system having the beneficial properties of the basic fluxes while maintaining the all-position capability and good wetting characteristics of the acid fluxes. Furthermore, improved impact properties are maintained even though little or no magnesium oxide is utilized in the slag system of the present invention.

Deoxidizers and alloying ingredients in the core of the welding electrode of the present invention include from 0.20 to 2.0 percent and preferably 0.5 to 1.5 percent, silicon, from 0.50 to 4.5 percent, and preferably 1.5 to 3.0 percent manganese, and from 0.003 to 0.080 percent, and preferably 0.01 to 0.03 percent boron. Additional metals, including iron, nickel, chrome and/or molybdenum powder alloys, may be added to the core of the electrode, e.g., in an amount of 0.5 to 5.0 percent, to produce low alloy weld deposits. The silicon and manganese may be added to the core in a combined force such as ferrosilicon, ferromanganese, ferromanganese-silicon, calcium silicide, and the like. The manganese and the silicon in the core deoxidize the weld deposit, and the silicon further contributes to the out-of position capabilities of the electrode by forming silicon oxides in the arc during welding, thereby increasing the viscosity and support capability of the slag.

However, it should be noted that silicon may have a detrimental effect on deposit toughness, as may be measured by a Charpy V-notch impact test, and, therefore the silicon content should be minimized if good toughness is a primary goal, especially after stress relief treatments. But some silicon is necessary to deoxidize the weld deposit, control the slag viscosity and freezing characteristics, and promote the good fusion of the weld deposit to the base plate and with a smooth contour.

As taught in United Kingdom Patent Application No. 8104020, the specified additions of the microalloy boron in the titanium dioxide slag based electrode reduce the detrimental effect which titanium is known to have on the impact properties and notch toughness of a weld deposit. Welds deposited with conventional electrodes having a slag forming system based on titanium dioxide can contain titanium which is reduced from the slag at high arc temperatures.

Such titanium, typically present in the deposited weld in a range of from about 0.02 to 0.07 percent, is detrimental to the notch toughness of the weld, especially in the stress relieved condition. The detrimental

3

0 067 494

effect of titanium is attributed to the precipitation of titanium at the grain boundaries of the weld deposit, perhaps in the form of a carbonitride.

It is also known that the heat input of the flux-cored welding process, when welding with a conventional titanium dioxide slag based electrode, results in the formation of a large percentage of grain boundary proeutectoid ferrite. Acicular ferrite is also found between the long columnar grains of such proeutectoid ferrite. Large percentages of proeutectoid ferrite has been found to be detrimental to the impact properties of a deposited weld since they provide areas which offer little or no resistance to the propagation of a crack.

Welds deposited with the electrode of the present invention have been found to exhibit improved notch toughness and impact properties; more particularly, the titanium has less of an adverse effect on the impact properties of a weld deposit when boron has been added to the core of the electrode. It appears that the titanium acts to provide the internal shielding necessary to protect the boron from oxidation of forming a nitride. Also, the boron in the electrode of the present invention promotes grain refinement. In particular, when boron, in the range of from 0.003 to 0.08 percent of the total electrode weight is added to the core of the electrode, less proeutectoid ferrite, and more acicular ferrite is formed during solidification of the weld. Also, with the electrode of the present invention, the remaining proeutectoid ferrite grains become discontinuous, thus further improving the impact properties of the deposited weld.

A gas shield is provided about the arc when welding with the electrode of the present invention. Shielding gases may include, by way of example, carbon dioxide, carbon dioxide—argon mixtures, and argon—oxygen mixtures. It has also been found that a current value in a range of from about 150 to 300 amperes at about 20 to 30 volts is sufficient to weld with the electrodes of the present invention, particularly in the vertical position.

Table I below sets forth the chemical composition of an exemplary electrode of the present invention and one electrode with a conventional titanium dioxide slag system. The only major difference between these electrodes is the addition of boron to the electrode of Example 2.

TABLE I
Composition

| Electrode constituents | Amount (% of total electrode weight) | |
| --- | --- | --- |
| | Example 1 | Example 2 |
| $TiO_2$ | 7.35 | 7.00 |
| MgO | — | — |
| $CaF_2$ | — | — |
| $Na_2O$ | 0.26 | 0.25 |
| Si | 1.08 | 1.03 |
| Mn | 2.84 | 2.70 |
| B | — | 0.02 |
| Fe | remainder | remainder |

The chemistry of the welds deposited with the electrodes are set forth in the above examples, with a carbon dioxide shielding gas and a current value of about 200 amperes at about 24 volts, are set forth in Table II below. It should be understood that other welding parameters would be optimum for welding in other positions and with different shielding gases.

4

**0 067 494**

TABLE II

| Weld deposit constituents | Amount (% by weight) | |
| --- | --- | --- |
| | Example 1 | Example 2 |
| C | .066 | .064 |
| Mn | 1.23 | 1.29 |
| Si | .46 | .49 |
| P | .006 | .006 |
| S | .018 | .019 |
| Ti | .031 | .035 |
| B | — | .007 |

The as-welded physical properties of the welds specified in the above examples for both flat and vertical welding positions are set forth in Table III below:

TABLE III

| | Example 1 | | Example 2 | |
| --- | --- | --- | --- | --- |
| | Flat | Vertical-up | Flat | Vertical-up |
| Mechanical properties | | | | |
| Yield strength (kg/cm$^2$) | 5570 | 4840 | 6020 | 5101 |
| Tensile strength (kg/cm$^2$) | 6550 | 5770 | 6470 | 5930 |
| Elongation (%) | 26 | 26 | 26 | 28 |
| Reduction of area (%) | 64 | 68 | 66 | 67 |
| Average CVN impacts | | | | |
| 22°C (+72°F) (Joules) | 99 | 103 | 121 | 132 |
| −18°C (0°F) (Joules) | 61 | 56 | 87 | 98 |
| −29°C (−20°F) (Joules) | 41 | 31 | 77 | 75 |

Table IV, below, sets forth the chemical composition of another exemplary electrode (Example 3) of the present invention, and that of an electrode with MgO and $CaF_2$ in the ranges disclosed in United Kingdom Patent Application No. 8104020 referenced above (Example 4). This table shows the acceptability of elimination of the MgO, and optionally the $CaF_2$, from the slag system.

5

**0 067 494**

TABLE IV

| Electrode constituents | Amount (% of total electrode weight) | |
| --- | --- | --- |
| | Example 3 | Example 4 |
| $TiO_2$ | 7.40 | 7.32 |
| MgO | 0.52 | — |
| $CaF_2$ | 0.07 | — |
| $Na_2O$ | 0.22 | 0.22 |
| Si | 0.92 | 0.91 |
| Mn | 1.72 | 1.70 |
| B | 0.019 | 0.019 |
| Fe | Remainder | Remainder |

Weld deposit chemistries provided by welding with electrodes set forth in the above examples with a 75% argon/25% $CO_2$ shielding gas, are set forth below in Table V:

TABLE V

| Weld deposit constituents | Amount (% by weight) | |
| --- | --- | --- |
| | Example 3 | Example 4 |
| C | .045 | .042 |
| Mn | 1.08 | 1.05 |
| Si | .55 | .56 |
| P | .005 | .005 |
| S | .019 | .018 |
| Ti | .04 | .04 |
| B | .007 | .007 |

The as-welded (AW) and stress relieved (SR) physical properties of welds deposited in the flat position set forth in examples 3 and 4 are shown in Table VI below:

6

TABLE VI

| | Example 3 | | Example 4 | |
|---|---|---|---|---|
| | AW | SR* | AW | SR* |
| Mechanical properties | | | | |
| Yield strength (kg/cm²) | 5100 | 4770 | 5080 | 4770 |
| Tensile strength (kg/cm²) | 5880 | 5720 | 5860 | 5690 |
| Elongation (%) | 27 | 29 | 29 | 29 |
| Reduction of area (%) | 67 | 69 | 73 | 74 |
| Average CVN impacts | | | | |
| 22°C (+72°F) (Joules) | 140 | 144 | 121 | 136 |
| −18°C (0°F) (Joules) | 81 | 72 | 72 | 60 |
| −46°C (−50°F) (Joules) | 50 | 33 | 46 | 31 |

*Stress relieved 8 hours at 1125°F (607°C).

The following examples in Table VII further demonstrate the acceptability of eliminating magnesium oxide and optionally calcium fluoride from the slag system of the electrodes of the present invention. Only a minor reduction in impact properties occurs when MgO and $CaF_2$ are removed from the slag system.

TABLE VII

| Slag constituents in the core (% of total electrode weight) | Example 5 | Example 6 |
|---|---|---|
| $TiO_2$ | 7.24 | 7.33 |
| $CaF_2$ | 0.07 | — |
| $Na_2O$ | 0.39 | 0.32 |
| MgO | 0.53 | — |
| Average CVN impact strength (joules) with $CO_2$ shielding gas, vertical position | | |
| Stress relieved           0°F (−18°C) | 94 | 79 |
| 8 Hours at 1125°F     −20°F (−29°C) (607°) | 79 | 61 |

**Claims**

1. A welding electrode having a generally tubular ferrous metal sheath, and a core defined within the sheath, for use in gas shield welding wherein the shielding gas consists of carbon dioxide, inert gas, or oxygen and inert gas mixtures, or mixtures thereof, characterised in that said core consists of:—

(A) the following components in the percentage amounts stated based on the total weight of the electrode:

from 3.0 to 12.0% titanium dioxide

from 0 to less than 0.2% magnesium oxide up to 2.0% calcium fluoride,

from 0.1 to 1.0% sodium oxide

from 0.2 to 2.0% silicon,

from 0.5 to 4.5% manganese

from 0.003 to 0.08% boron, and optionally

(B) an alloying powder consisting of nickel, chrome, molybdenum or iron, or mixtures thereof.

2. A welding electrode according to claim 1, wherein the titanium dioxide in the core is from 6.0 to 8.0% of the total weight of the electrode.

3. A welding electrode according to claim 2, wherein the titanium dioxide in the core is from 6.25 to 7.75% of the total weight of the electrode.

7

4. A welding electrode according to claim 1, 2 or 3, wherein the silicon in the core is from 0.5 to 1.5% of the total weight of the electrode.

5. A welding electrode according to any one of the preceding claims, wherein the manganese in the core is from 1.5 to 3.0% of the total weight of the electrode.

6. A welding electrode according to any one of the preceding claims, wherein the boron in the core is from 0.01 to 0.03% of the total weight of the electrode.

7. A welding electrode according to any one of the preceding claims, wherein the said alloying powder in the core, consisting of nickel, chrome, molybdenum or iron or mixtures thereof, is from 0.5 to 5.0% of the total weight of the electrode.

8. A welding electrode having a generally tubular ferrous metal sheath, and a core defined within the sheath for use in gas shield welding wherein the shielding gas consists of carbon dioxide, inert gas, oxygen and inert gas mixtures or mixtures thereof, said core consisting of, by total weight of the electrode,

from 6.0 to 8.0% titanium dioxide,

from 0.04 to 0.09% calcium fluoride, from 0.2 to 0.4% sodium oxide,

from 0.5 to 1.5% silicon,

from 1.5 to 3.0% manganese, and

from 0.01 to 0.03% boron.


## Patentansprüche

1. Schweißelektrode mit im wesentlichen rohrförmiger Hülle aus Eisenmetall und einem in der Hülle angeordneten Kern, zur Verwendung beim Schutzgasschweißen, wobei das Schutzgas aus Kohlendioxid, Edelgas oder Sauerstoff und Edelgasgemischen oder deren Mischungen besteht, dadurch gekennzeichnet, daß der Kern besteht aus

(A) den folgenden Bestandteilen, deren Prozentangaben sich auf das Gesamtgewicht der Elektrode beziehen:

von 3,0 bis 12,0% Titandioxid,

von 0 bis weniger als 0,2% Magnesiumoxid, bis zu 2,0% Kalziumfluorid,

von 0,1 bis 1,0% Natriumoxid,

von 0,2 bis 2,0% Silizium,

von 0,5 bis 4,5% Mangan,

von 0,003 bis 0,08% Bor und gegebenenfalls

(B) einem Legierungspulver, das aus Nickel, Chrom, Molybdän oder Eisen oder deren Gemischen besteht.

2. Schweißelektrode nach Anspruch 1, bei der das Titandioxid im Kern den Bereich von 6,0 bis 8,0% des Gesamtgewichts der Elektrode umfaßt.

3. Schweißelektrode nach Anspruch 2, bei der das Titandioxid im Kern den Bereich von 6,25 bis 7,75% des Gesamtgewichts der Elektrode umfaßt.

4. Schweißelektrode nach Ansprüchen 1, 2 oder 3, bei der das Silizium im Kern den Bereich von 0,5 bis 1,5% des Gesamtgewichts der Elektrode umfaßt.

5. Schweißelektrode nach einem der vorhergehenden Ansprüche, bei der das Mangan im Kern den Bereich von 1,5 bis 3,0% des Gesamtgewichts der Elektrode umfaßt.

6. Schweißelektrode nach einem der vorhergehenden Ansprüche, bei der das Bor im Kern den Bereich von 0,01 bis 0,03% des Gesamtgewichts der Elektrode umfaßt.

7. Schweißelektrode nach einem der vorhergehenden Ansprüche, bei der das Legierungspulver im Kern, das aus Nickel, Chrom, Molybdän oder Eisen oder deren Gemischen besteht, den Bereich von 0,5 bis 5,0% des Gesamtgewichts der Elektrode umfaßt.

8. Schweißelektrode mit einer im wesentlichen rohrförmigen Hülle aus Eisenmetall und einem in der Hülle angeordneten Kern zur Verwendung beim Schutzgasschweißen, wobei das Schutzgas aus Kohlendioxid, Edelgas, Sauerstoff und Edelgasgemischen oder deren Mischungen besteht, wobei der Kern, bezogen auf das Gesamtgewicht der Elektrode die folgende Zusammensetzung aufweist

von 6,0 bis 8,0% Titandioxid,

von 0,04 bis 0,09% Kalziumfluorid,

von 0,2 bis 0,4% Natriumoxid,

von 0,5 bis 1,5% Silizium,

von 1,5 bis 3,0% Mangan und

von 0,01 bis 0,03% Bor.


## Revendications

1. Electrode de soudage formée d'une gaîne en métal ferreux de forme générale tubulaire et d'un coeur délimité par l'intérieur de la gaîne, pour utilisation dans le soudage à l'arc sous gaz de protection, ce gaz pouvant être de l'anhydride carbonique, un gaz inerte ou un mélange d'oxygène et d'un gaz inerte ou un mélange de ces gaz, caractérisée en ce que ledit coeur se compose:

(A) des constituants suivants dont les pourcentages sont rapportés au poids total de l'électrode:

3 à 12% d'oxyde de titane;

0 à moins de 2% d'oxyde de magnésium;

un maximum de 2% de fluorure de calcium;

0,1 à 1% d'oxyde de sodium;

0,2 à 2% de silicium;

0,5 à 4,5% de manganèse;

0,003 à 0,080% de bore, et éventuellement

(B) un élément d'alliage en poudre constitué par du nickel, du chrome, du molybdène ou du fer ou un mélange de deux ou plusieurs de ces métaux.

2. Electrode de soudage selon la revendication 1, caractérisée en ce que la quantité d'oxyde de titane contenue dans le coeur est de 6 à 8% du poids total de l'électrode.

3. Electrode de soudage selon la revendication 2, caractérisée en ce que la quantité d'oxyde de titane contenue dans le coeur est de 6,25 à 7,75% du poids total de l'électrode.

4. Electrode de soudage selon l'une des revendications précédentes, caractérisée en ce que la quantité de silicium contenue dans le coeur est de 0,5 à 1,5% du poids total de l'électrode.

5. Electrode de soudage selon l'une des revendications précédentes, caractérisée en ce que la quantité de manganèse contenue dans le coeur est de 1,5 à 3% du poids total de l'électrode.

6. Electrode de soudage selon l'une des revendications précédentes, caractérisée en ce que la quantité de bore contenue dans le coeur est de 0,01 à 0,03% du poids total de l'électrode.

7. Electrode de soudage selon l'une des revendications précédentes, caractérisée en ce que la poudre l'élément d'alliage contenue dans le coeur est une poudre de nickel, de chrome, de molybdène ou de fer ou un mélange de poudres de deux ou plusieurs de ces métaux et que la quantité de cette poudre contenue dans le coeur est de 0,5 à 5% du poids total de l'électrode.

8. Electrode de soudage formée d'une gaîne en métal ferreux de forme générale tubulaire et d'un coeur délimité par l'intérieur de cette gaîne, pour utilisation dans le soudage à l'arc sous gaz de protection, ce gaz étant de l'anhydride carbonique, un gaz inerte ou un mélange d'oxygène et d'un gaz inerte ou un mélange de ces gaz, caractérisé en ce que ledit coeur se compose de:

6 à 8% d'oxyde de titane;

0,04 à 0,09% de fluorure de calcium;

0,2 à 0,4% d'oxyde de sodium;

0,5 à 1,5% de silicium;

1,5 à 3% de manganèse, et

0,01 à 0,03% de bore.